# EUROPÄISCHE PATENTSCHRIFT

(11) **EP 2 139 746 B1**
(45) Veröffentlichungstag und Bekanntmachung des Hinweises auf die Patenterteilung: **15.05.2013**
(21) Anmeldenummer: 08734613.6
(22) Anmeldetag: 14.03.2008
(51) Int. Cl.: B62B 9/24

(54) **KINDERWAGEN MIT EINER GURTBEFESTIGUNGS- UND EINSTELLVORRICHTUNG**
STROLLER HAVING A SEAT BELT ATTACHMENT AND ADJUSTMENT DEVICE
VOITURE POUR ENFANTS PRÉSENTANT UN DISPOSITIF DE FIXATION ET DE RÉGLAGE DE LA SANGLE

(30) Priorität: 22.03.2007 DE 102007013766
(43) Veröffentlichungstag der Anmeldung: 06.01.2010
(73) Patentinhaber: CYBEX GmbH, 95448 Bayreuth (DE)
(72) Erfinder: POS, Martin, 95445 Bayreuth (DE)
(74) Vertreter: Popp, Eugen
(86) Internationale Anmeldenummer: PCT/EP2008/002062
(87) Internationale Veröffentlichungsnummer: WO 2008/113522

(56) Entgegenhaltungen:
- GB-A- 2 419 154
- NL-C2- 1 026 768
- US-A1- 2005 110 318

## Beschreibung

Die Erfindung betrifft. einen Kinderwagen, insbesondere Kindersportwagen, Buggy oder dgl. Fahrzeuge für Kinder nach dem Oberbegriff des Patentanspruchs 1:
Kinderwagen, insbesondere Kindersportwagen, Buggys oder dgl. Fahrzeuge für Kinder sind seit langem bekannt und dienen dem praktischen Transport von Babys und Kleinkindern. Während Babys in Kinderwagen in aller Regel relativ ruhig liegen und sich ggf. nur zur Seite rollen, entfalten Kleinkinder in Kinderwagen, Kindersportwagen oder Buggys oft erhebliche Aktivitäten, aufgrund derer die Gefahr besteht, dass diese Kleinkinder aus ihrem Fahrzeug fallen und sich hierbei verletzen. Aus diesem Grund besteht die Notwendigkeit, ein Schutzsystem, beispielsweise in Form eines Gurtsystems zu verwenden, mittels dessen die Insassen solcher Kinderwagen, Kindersportwagen, Buggys oder ähnlicher Fahrzeuge für Kinder, nämlich Babys und insbesondere Kleinkinder an einem Herausfallen gehindert werden. Bislang wurde zu diesem Zweck üblicherweise ein Hüftgurt verwendet, der dem Kleinkind im Beckenbereich umgelegt wurde, wobei die beiden Enden des Hüftgurts an jeweiligen Rahmenteilen des Kinderwagens befestigt waren. Als Alternative zu einem solchen Hüftgurt wurde bislang auch ein Brustgeschirr eingesetzt, das beispielsweise mittels eines Riemens an dem Kinderwagen, vorzugsweise an dessen Gestell befestigt war.

Diese beiden vorgenannten Sicherungssysteme weisen jedoch gravierende Mängel auf, wobei, insbesondere bei einem Kindersportwagen oder Buggy, die Verwendung eines Hüftgurts nur einen unzureichenden Schutz gegen Herausfallen bietet, da ein Kind aus einem solchen Gurt herauskippen kann, wenn es sich zur Seite neigt. Demgegenüber bietet ein Brustgeschirr einen etwas besseren Schutz, ist jedoch aufgrund der vielfältigen Schlingen und Riemen kompliziert in der Handhabung, so dass aufgrund dieser komplizierten Handhabbarkeit oft auf den Gebrauch des Brustgeschirrs vollständig verzichtet wird oder das Brustgeschirr nicht korrekt angelegt bzw. nicht korrekt mit dem Kinderwagen verbunden wird.

Des weiteren besteht bei den beiden vorgenannten Sicherungssystemen die Problematik, dass nicht jeder Kinderwagen, respektive Kindersportwagen oder Buggy zur Anbringung eines solchen Sicherungssystems geeignet ist, da beispielsweise einige der vorgenannten Fahrzeuge bereits eigene Bügelmechanismen zum Schutz gegen Herausfallen aufweisen, die jedoch in aller Regel auch nur einen unzureichenden Schutz bieten, wobei derartige Fahrzeuge dann jedoch oft keine weitere Möglichkeit zur Anbringung einer sicheren Schutzvorrichtung gegen Herausfallen eines Kindes aus einem solchen Kinderwagen bieten.

Aus der gaffungemäßen GB 2 419 154 A ist ein Kinderwagen, insbesondere Buggy bekannt, der eine Sitzfläche und Rückenlehne umfasst, wobei am vorderen Randbereich der Sitzfläche eine Gurtbefestigungs- und -einstellvorrichtung angeordnet ist.

Die Gurtbefestigungsvorrichtung ist hierbei als Teil eines Gurtsystems vorgesehen, das zwei Schultergurte umfasst, die mittels je eines Schließkörpers mit der Gurtbefestigungs-vorrichtung verbindbar sind. Diese Verbindbarkeit der Schließkörper mit der Gurtbefestigungsvorrichtung ist mittels eines Schnappverschlusses realisiert. Die Schultergurte sind in Form sogenannter Hosenträgergurte ausgebildet, die von einem Schrittbereich eines auf der Sitzfläche sitzenden Kindes symmetrisch über dessen Schulter nach oben verlaufen und andererseits, wiederum vorzugsweise symmetrisch, über dessen Oberschenkel verlaufen und mit seitlichen Rahmenteilen des Kinderwagens verbunden sind. Zu diesem Zweck werden die beiden Gurte jeweils im Hüftbereich durch eine an dem Schließkörper befindliche Gurtdurchführung geführt und umgelenkt. Ferner werden die beiden Gurte im Schulterbereich durch eine Gurtführung im Rahmen, respektive Gestell des Kinderwagens geführt und wiederum nach unten umgelenkt.

Des weiteren ist als Teil des bekannten Gurtsystems eine Gurteinstellvorrichtung vorgesehen, wobei die zwei Schultergurte auf einer der Sitzfläche oder der Rückenlehne abgewandten Seite eines in eine Sitzposition bringbaren Gestells des Kinderwagens eine Verlängerung aufweisen, die sich durch die Gurteinstellvorrichtung hindurch erstreckt. Hierbei sind die beiden Schultergurte auf der der der Rückenlehne abgewandten Seite zu einem Gurt zusammengeführt, der die vorerwähnte Verlängerung bildet.

Ausgehend von diesem Stand der Technik liegt der vorliegenden Erfindung die Aufgabe zugrunde, die Einstellung der Schultergurtlänge stets leichtgängig, d.h. leicht handhabbar zu gestalten, und zwar unabhängig von der Größe oder dem Gewicht eines im Kinderwagen positionierten Kindes.

Diese Aufgabe wird durch die kennzeichnenden Merkmale des Anspruches 1 gelöst.

Durch die Vorsehung einer solchen Führung wird in vorteilhafter Weise gewährleistet, dass die Verlängerung entlang der Sitzfläche und der Rückenlehne des Kinderwagens verläuft, ohne dass bei einem Spannen der Gurte eine Verformung der Sitzfläche und der Rückenlehne durch den gespannten Verlängerungsgurt erfolgen. Darüber hinaus wird durch die Verwendung einer Führung ein Verheddern oder Durchhängen des Verlängerungsgurtes verhindert.

Alternativ können auch die beiden Gurte selbst eine solche separate Verlängerung aufweisen, wobei sich diese beiden separaten Verlängerungen dann jeweils für sich durch die Gurteinstellvorrichtung hindurch erstrecken. Es sei jedoch erwähnt, dass die Alternative, bei welcher die beiden Schultergurte in eine gemeinsame Verlängerung übergehen, bevorzugt ist, da auf diese Weise immer ein gleichmäßiges Spannen der Schultergurte mittels der Gurteinstellvorrichtung möglich ist.

Die Gurtbefestigungs- und -einstellvorrichtung ist vorzugsweise in einem zentralen Bereich des vorderen Randbereichs der Sitzfläche angeordnet, da auf diese Weise in optimaler Weise eine symmetrische Sicherung des sitzenden Kindes in dem Kindersportwagen oder Buggy erfolgen kann. Die Sitzfläche und/oder die Rückenlehne des jeweiligen Fahrzeugs sind hierbei vorzugsweise aus einem flexiblen, insbesondere textilen Material hergestellt oder umfassen zumindest ein solches, so dass eine Zusammenklappbarkeit des Kindersportwagens oder Buggys auf einfache Weise möglich ist. Die flexible Sitzfläche und/oder Rückenlehne ist hierbei zwischen entsprechenden Rahmenteilen des Gestells des Kinderwagens aufgespannt.

Die Gurtbefestigungsvorrichtung ist gemäß einer Ausführungsform oberhalb der Sitzfläche angeordnet und kippbar auf dieser angebracht, wobei die Gurtbefestigungsvorrichtung in einer Ruheposition, ggf. durch die Wirkung einer Feder, im Wesentlichen auf der Sitzfläche aufliegt. Auf diese Weise ist einerseits eine sehr einfache Zugänglichkeit zu der Gurtbefestigungsvorrichtung gewährleistet, so dass die jeweiligen Schließkörper einfach in die Gurtbefestigungsvorrichtung einsteckbar sind und in dieser einrasten. Ggf. werden die beiden Schließkörper vor einem Einführen in die Gurtbefestigungsvorrichtung miteinander in Formschluss gebracht, damit ein einheitliches gemeinsames, problemloses Einführen in die vorzugsweise als Schnappverschluss ausgebildete Gurtbefestigungsvorrichtung möglich ist.

Gemäß einer weiteren Ausführungsform kann die Gurtbefestigungsvorrichtung in der Sitzfläche versenkt sein, so dass von oberhalb der Sitzfläche nur der Einführschlitz für an dem Schließkörper vorhandene Schließ- und Schnappvorsprünge sichtbar ist, die in bekannter Weise für einen Schnappverschluss notwendig sind.

Die Verlängerung der Schultergurte ist in der Gurteinstellvorrichtung mittels einer Klemmvorrichtung, insbesondere einer Exzentervorrichtung, einseitig belastbar und lösbar arretiert, so dass die Verlängerung in einer Richtung durch die Gurteinstellvorrichtung gezogen werden kann, wobei sich die Schultergurte straffen und einen sicheren Halt des Kindes auf der Sitzfläche des Kinderwagens gewährleisten. Die Klemmvorrichtung gewährleistet hierbei, dass ein Zurückrutschen der Gurtverlängerung nur dann möglich ist, wenn die Klemmvorrichtung gelöst wird, wobei eine Lösevorrichtung, beispielsweise in Form eines einfachen Hebel- oder Druckmechanismus erfindungsgemäß vorgesehen ist. Die Klemmvorrichtung ist so ausgestaltet, dass ein Rückrutschen des Gurtes sicher vermieden wird. Mit anderen Worten ist eine Belastbarkeit der Klemmvorrichtung in Richtung der Schultergurte somit möglich, während an den durch die Gurteinstellvorrichtung hindurch verlaufenden Verlängerungsgurte ein Spannen der Schultergurte durch Zug möglich ist.

Gemäß einer Ausführungsform der Erfindung ist die Gurteinstellvorrichtung im Wesentlichen unterhalb und/oder in einer Ebene der Fläche angeordnet, wobei eine Lösevorrichtung zum Lösen der Klemmvorrichtung von oberhalb der Sitzfläche zugänglich ist. Gemäß dieser Ausführungsform verläuft die Verlängerung der Schultergurte unterhalb der Sitzfläche in die Gurteinstellvorrichtung hinein, erstreckt sich durch diese, insbesondere durch die in der Gurteinstellvorrichtung befindliche Klemmvorrichtung hindurch und mündet auf einer im vorderen Bereich der Sitzfläche bzw. der Gurteinstellvorrichtung befindlichen Gurtdurchführung. An dieser sich aus der Gurteinstellvorrichtung heraus erstreckenden Gurtverlängerung kann Zug ausgeübt werden, so dass sich die Schultergurte sowie die sich über die Oberschenkel des Kindes erstreckenden Gurtabschnitte spannen und auf diese Weise das Kind sichern.

Gemäß einer weiteren Ausführungsform ist die Gurtbefestigungsvorrichtung mit der Gurteinstellvorrichtung als eine Einheit ausgebildet, wobei die Gurtbefestigungsvorrichtung und die Gurteinstellvorrichtung gegebenenfalls relativ zueinander und/oder bezüglich der Sitzfläche ein- oder mehrachsig verkippbar sind. Die Gurtbefestigungsvorrichtung ist hierbei mit der Gurteinstellvorrichtung über eine Niet- oder Bolzenverbindung sichergestellt, wobei eine solche Verbindung auch mittels eines Gurtes ausgeführt sein kann. Eine Verbindung der Gurteinstellvorrichtung mit der Sitzfläche kann dementsprechend ebenfalls über eine Niet- oder Bolzenverbindung oder aber mittels eines Gurtes realisiert sein.

Durch die Verkippbarkeit der Gurtbefestigungsvorrichtung gegenüber der Gurteinstellvorrichtung und/oder gegenüber der Sitzfläche ist eine optimale Anpassung dieser Einheit gegenüber einem auf der Sitzfläche sitzenden Kind gewährleistet, wobei die Einheit aus Gurtbefestigungsvorrichtung und Gurteinstellvorrichtung eine optimal Anpassung an den durch das sitzende Kind definierten Platz für diese Einheit zwischen den Beinen des Kindes ermöglicht. Hierbei sei betont, dass ein Verkippen vorzugsweise entlang der Längsachse des Kinderwagens möglich ist; im Falle der Verwendung eines Gutes zwischen der Sitzfläche, der Gurteinstellvorrichtung und der Gurtbefestigungs-vorrichtung ist jedoch auch ein Verkippen quer zu dieser Längsachse möglich. Selbstverständlich könnte hier auch ein Kugelgelenk eingesetzt werden.

Erfindungsgemäß ist die Einheit oder die Gurtbefestigungsvorrichtung und/oder die Gurteinstellvorrichtung zumindest teilweise innerhalb einer Umhüllung, insbesondere einer Hülse angeordnet. Diese Hülse, respektive Umhüllung, weist ein weiches und/oder nachgiebiges Material, insbesondere Gummi auf, so dass eine angenehme Griffigkeit einerseits und ein Schutz vor Verletzungen andererseits durch diese Umhüllung gewährleistet sind.

Die vorerwähnte Einheit oder die Gurtbefestigungsvorrichtung und/oder die Gurteinstellvorrichtung ist mittels einer Befestigungsvorrichtung, insbesondere einer Grundplatte, an der Sitzfläche, insbesondere im Wesentlichen unterhalb der Sitzfläche mit sich durch die Sitzfläche hindurch erstreckenden Halteteilen, befestigt. An diesen Halteteilen, welche von der Grundplatte ausgehen und sich durch die Sitzfläche hindurch erstrecken ist entweder die Einheit aus Gurtbefestigungsvorrichtung und Gurteinstellvorrichtung oder aber die Gurtbefestigungsvorrichtung und/oder die Gurteinstellvorrichtung wir vorerwähnt, beispielsweise mittels Nieten oder Bolzen oder unter Zuhilfenahme eines Gurtes, befestigt.

Des weiteren ist die Sitzfläche und/oder die Rückenlehne zumindest teilweise, insbesondere mittels wenigstens einem, vorzugsweise flächigen, Träger unterstützt. Dieser Träger besteht in vorteilhafter Weise aus Kunststoff und gewährleistet eine optimale Passform der Sitzfläche und der Rückenlehne auch in belastetem Zustand, wobei eine belastungsbedingte Deformation, beispielsweise durch Dehnung der Sitzfläche und der Rückenlehne vermieden wird. Darüber hinaus kann dieser Träger auch als Führung für die vorerwähnte Verlängerung der Schultergurte verwendet werden. Zu diesem Zweck können an dem Träger einzelne Führungselemente vorgesehen sein.

Darüber hinaus kann der Träger zumindest abschnittsweise als Befestigungsvorrichtung zur Anbringung der Gurtbefestigungsvorrichtung und/oder der Gurteinstellvorrichtung oder der Einheit daraus ausgebildet sein. Gemäß einer weiteren Variante kann der Träger auch mit der Befestigungsvorrichtung zusammen wirken und beispielsweise stabilisierend auf diese einwirken.

Weiter Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine schematische Darstellung einer ersten Ausführungsform der Erfindung, wobei nur die wesentlichen Rahmenteile, die Sitzfläche, die Rückenlehne sowie das zugehörige Gurtsystem dargestellt sind;
- Fig. 2: eine Detailansicht des Gurtsystems gemäß Fig. 1;
- Fig. 3: eine Explosionsansicht der Funktionskomponenten der erfindungsgemäßen Gurtbefestigungsvorrichtung und Gurteinstellvorrichtung;
- Fig. 4: eine schematische Darstellung einer weiteren Ausführungsform der Erfindung anhand ihrer wesentlichen Komponenten;
- Fig. 5: eine Ausschnittsvergrößerung des Gurtsystems gemäß Fig. 4; und
- Fig. 6: eine schematische Detailansicht der Gurteinstellvorrichtung gemäß den Fig. 4 und 5.

In der nachfolgenden Beschreibung werden für gleiche und gleich wirkende Teile dieselben Bezugsziffern verwendet.

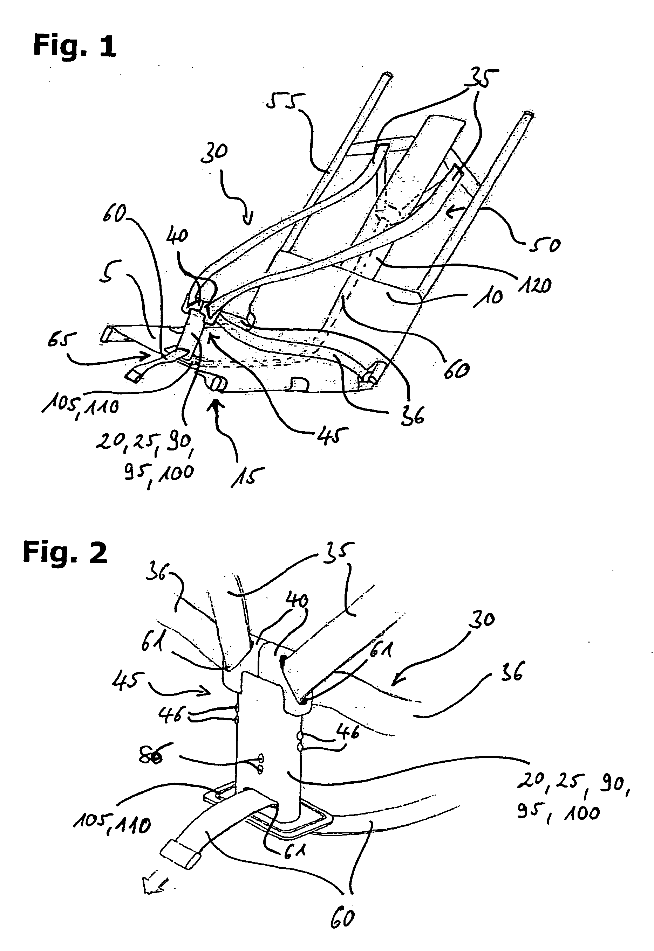

Fig. 1 zeit das Gestell 55 eines erfindungsgemäßen Kindersportwagens bzw. Buggys mit einer Sitzfläche 5, einer Rückenlehne 10 und einem im rückwärtigen Bereich der Rückenlehne angeordneten Träger 120, der als flache Unterstützung der Rückenlehne 10 ausgebildet ist. Der Träger 120 ist aus Kunststoff gefertigt, könnte jedoch alternativ auch aus einem festen textilen Flächengebilde bestehen, das im Bereich der Rückenlehne 10 an dieser und darüber hinaus im oberen Bereich des Gestells 55 des Kinderwagens befestigt ist.

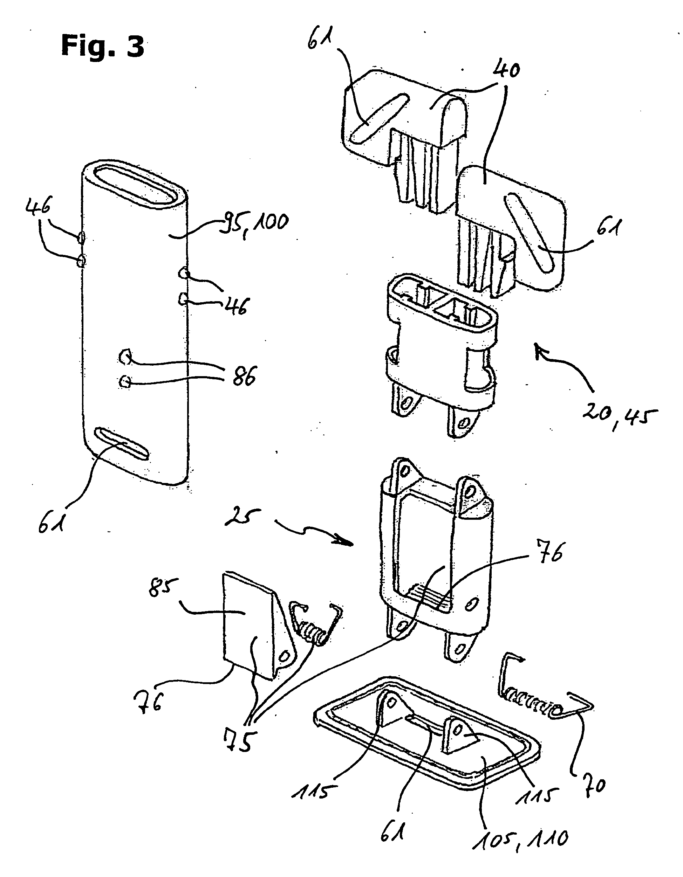

Ferner zeigt Fig. 1 ein aus zwei Schultergurten 35, zwei an den Schultergurten verschieblich angeordneten Schließkörpern 40, einer die Schultergurte 35 fortsetzenden Verlängerung 60, einer Gurtbefestigungsvorrichtung 20 und einer Gurteinstellvorrichtung 25 bestehendes Gurtsystem 30. Die Schultergurte 35 sind durch die Schließkörper 40 jeweils in einen Oberschenkelgurtabschnitt 36 und einen Schultergurtabschnitt 35 unterteilt, wobei der Gurt an seinem Ende des Oberschenkelgurtabschnitts 36 in einem hinteren Bereich der Sitzfläche 5 mit dem Gestell 55 des Kinderwagens befestigt ist. Von diesem Befestigungspunkt aus erstreckt sich der Gurt durch eine Gurtdurchführung 61 des Schließkörpers 40 in den einer Schulter eines Kindes zugeordneten Gurtabschnitt, der im Rahmen dieser Erfindung als Schultergurt 35 bezeichnet wird. Dieser Schultergurt 35 erstreckt sich wiederum durch eine Gurtdurchführung 61 des Gestells 55 des Kinderwagens in einen rückwärtigen, nämlich der Sitzfläche 5 und der Rückenlehne 10 abgewandten Bereich 50, wo die beiden Schultergurte 35 in einer gemeinsamen Verlängerung 60 der Schultergurte 35 münden. Diese Verlängerung 60 ist fest mit den Schultergurten 35 verbunden und erstreckt sich von der Verbindungsstelle weg in Richtung Unterseite der Sitzfläche 5, wo sich diese Verlängerung 60, wie in Fig. 3 gut erkennbar ist, durch eine Gurtdurchführung 61 erstreckt, die in der als Befestigungsvorrichtung 105 dienenden Grundplatte 110 vorgesehen ist. Im weiteren Verlauf erstreckt sich die Verlängerung 60 durch eine Klemmvorrichtung 75 sowie durch eine weitere Gurtdurchführung 61, welche in einer Umhüllung 95 bzw. einer Hülse 100 vorgesehen ist. Letzteres ist in den Fig. 1 und 2 gut erkennbar.

Durch einen Zug an der Verlängerung 60, welche sich aus der in der Hülse 100 befindlichen Gurtdurchführung 61 erstreckt in Pfeilrichtung gemäß Fig. 2 kann das Gurtsystem im Oberschenkelgurtabschnitt 36 sowie im Bereich des Schulterguts 35 gespannt werden, wobei die Klemmvorrichtung, welche in Fig. 3 gut erkennbar ist, ein Zurückrutschen der Verlängerung 60 verhindert. Die Klemmung wird einerseits durch eine in der Klemmvorrichtung 75 befindliche Feder sowie andererseits durch ihre Dimensionierung bewirkt, die so bemessen ist, dass der Verlängerungsgurt 60 an jeweiligen Klemmkanten 76 der Klemmvorrichtung 75 gehalten und somit arretiert wird.

Ferner ist in Fig. 1 erkennbar, dass die Gurtbefestigungs- 20 und -einstellvorrichtung 25 am vorderen Randbereich 15 der Sitzfläche 5 angeordnet ist und zwar in einem vorderen zentralen Bereich 65 der Sitzfläche 5.

Ferner ist in Fig. 1 und Fig. 2 erkennbar, dass die Gurtbefestigungs- 20 und -einstellvorrichtung 25 als eine Einheit 90 ausgebildet sind, die von einer Umhüllung 95, nämlich einer Hülse 100 umgeben ist, die sowohl eine Öffnungsvorrichtung 46 für den Schnappverschluss 45 der Gurtbefestigungsvorrichtung 20 als auch eine Betätigungsvorrichtung 86 für die Lösevorrichtung 85 der Gurteinstellvorrichtung 25 aufweist. Sowohl die Öffnungsvorrichtung 46 für den Schnappverschluss 45 als auch die Betätigungsvorrichtung 86 für die Lösevorrichtung 85 sind, wie in Fig. 2 und 3 gut erkennbar, in Form von noppenartigen Betätigungsknöpfen bzw. -stiften ausgebildet, durch welche jeweils ein Druck auf die darunter befindlichen Schnapp- bzw. Arretiermechanismen möglich ist, so dass diese jeweils gelöst werden.

Die Fig. 1 und 2 zeigen hierbei die erfindungsgemäße Gurtbefestigungsvorrichtung 20 nebst den zugehörigen Schließkörpern 40 in einer geschlossenen Position, während in Fig. 3 die als Schnappverschluss 45 ausgebildete Gurtbefestigungsvorrichtung 20 nebst den zugehörigen Schließkörpern 40 in einer offenen Position gezeigt ist. Die Einheit 90 aus Gurtbefestigungsvorrichtung 20 und Gurteinstellvorrichtung 25 ist auf einer als Befestigungsvorrichtung 105 dienenden Grundplatte 110 montiert, die sich gemäß Fig. 1 unterhalb der Sitz fläche 5 befindet und dort befestigt ist. An der Grundplatte 110 befindliche Halteteile 115 erstrecken sich hierbei durch die Sitzfläche 5 hindurch und dienen der Gurteinstellvorrichtung 25, die entsprechende korrespondierende Halteteile aufweist, als Befestigungspunkte. Die Befestigung der Gurteinstellvorrichtung 25 an den Halteteilen 115 der Grundplatte 110 kann alternativ mittels Nieten oder Bolzen, aber auch mittels Schraubverbindungen realisiert sein. Dementsprechend ist eine Verbindung zwischen der Gurteinstellvorrichtung 25 und der Gurtbefestigungsvorrichtung 20 ebenfalls mittels Niet-, Schraub- oder Bolzenverbindung möglich. Wie ferner in Fig. 3 erkennbar ist, weist die Grundplatte 110 eine Gurtdurchführung 61 auf, durch die sich, wie vorerwähnt, die Verlängerung 60 in Richtung der in der Gurteinstellvorrichtung 25 vorgesehenen Klemmvorrichtung 75 erstreckt.

Wie ebenfalls bereits erwähnt, ist die Gurtbefestigungsvorrichtung 20 und die Gurteinstellvorrichtung 25 als eine Einheit 90 ausgebildet, die von einer Hülse 100 umgeben ist, die neben einer Öffnungsvorrichtung 46 und einer Betätigungsvorrichtung 86 eine weitere Gurtdurchführung 61 aufweist, die sich in zusammengebautem Zustand in etwa in Höhe der zur Klemmvorrichtung 75 zugehörigen Klemmkanten 76 befindet, so dass die Gurtveräingerung 60 bzw. Verlängerung 60 ohne zusätzliche Reibung aus der Hülse 100 herausgeführt werden kann.

Die Einheit 90 aus Gurtbefestigungsvorrichtung 20 und Gurteinstellvorrichtung 25 erstreckt sich im Gebrauch, d.h. wenn die Schließköper 40 in der Gurtbefestigungsvorrichtung 20 eingerastet sind, nach oben von der Sitzfläche 5 weg. In einer Ruheposition, d.h. wenn die Gurtbefestigungsvorrichtung 20 und die Schließkörper 40 nicht miteinander in Eingriff sind, liegt die Einheit 90 jedoch im Wesentlichen auf der Sitzfläche 5 auf. Dies wird zum einen durch die wirkende Schwerkraft, jedoch auch darüber hinaus aufgrund der Wirkung der Feder 70, welche die Einheit 90 in Richtung Sitzfläche 5 drückt, bewirkt.

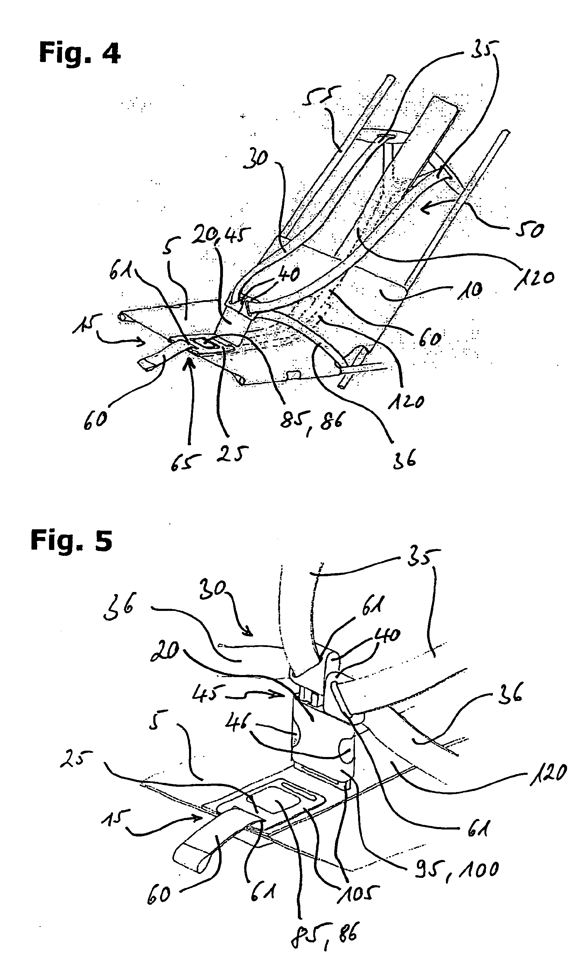

Fig. 4 zeigt eine weitre Ausführungsform der Erfindung, wobei die Gurtbefestigungsvorrichtung 20 und die Gurteinstellvorrichtung 25 nicht als Einheit 90, sondern als separate Komponenten ausgebildet sind. Die Gurtführung entspricht hierbei im Wesentlichen derjenigen der Fig. 1 und 2. Gemäß Fig. 4 und Fig. 5 ist die Gurtbefestigungsvorrichtung 20 jedoch nicht unmittelbar mit der Gurteinstellvorrichtung 25 verbunden, sondern ist an der Sitzfläche 5 des Kinderwagens befestigt.

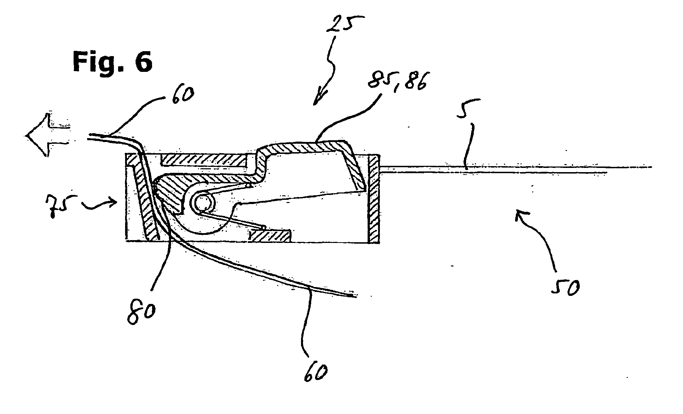

Die Gurteinstellvorrichtung 25 befindet sich im Wesentlichen unterhalb der Sitzfläche 5 bzw. durchbricht die Sitzfläche 5, wie in Fig. 6 gut ersichtlich ist, wobei ein Funktionsteil der Gurteinstellvorrichtung 25 mit Klemmvorrichtung 75 unterhalb der Ebene der Sitzfläche 5 angeordnet ist und nur die sich aus der Gurteinstellvorrichtung 25 heraus erstreckende Verlängerung 60 sowie die Betätigungsvorrichtung 86 bzw. die Lösevorrichtung 85 zum Lösen der Klemmvorrichtung 75 von oberhalb der Sitzfläche 5 aus zugänglich sind. In besonders einfacher Weise verläuft die Gurtverlängerung 60 hierbei von unten in die Klemmvorrichtung 75 der Gurteinstellvorrichtung 25, die als Exzentervorrichtung 80 ausgebildet ist und den Gurt so klemmt, dass er nur in Pfeilrichtung gemäß Fig. 6 gezogen werden kann, jedoch in die Gegenrichtung, also in Richtung Schultergurte fest arretiert ist. Durch Druck auf die Lösevorrichtung 85 bzw. die Betätigungsvorrichtung 86 kann diese Klemmwirkung temporär aufgehoben werden, wobei dieser Druck gegen die Wirkung einer Feder, beispielsweise einer Blattfeder oder einer Spiralfeder erfolgt.

De weiteren ist in Fig. 4 gut erkennbar, dass sowohl der Rückenbereich als auch die abgewandte Seite 50 der Rückenlehne 10 und der Sitzfläche 5 von einem flächigen Träger unterstützt sind, der im vorderen Randbereich 15 der Sitzfläche 5 mit der Befestigungsvorrichtung 105 zusammen wirkt, durch die sowohl die Gurtbefestigungsvorrichtung 20 als auch die Gurteinstellvorrichtung 25 mit der Sitzfläche 5 verbunden und an dieser befestigt sind.

De weiteren ist in Fig. 5 eine die Gurtbefestigungsvorrichtung 20 umgebende Umhüllung 95 dargestellt, welche zwei Ausnehmungen für die Betätigung der Öffnungsvorrichtung 46 des Schnappverschlusses 45 der Gurtbefestigungsvorrichtung 20 freilässt. Die Befestigung der Gurtbefestigungsvorrichtung 20 an der Sitzfläche 5 ist mittels eines Gurtes realisiert, so dass die Gurtbefestigungsvorrichtung 20 auf die Sitzfläche 5 kippen kann und insbesondere in einer Ruheposition auf dieser aufliegt.

### Bezugszeichenliste:

| | |
|---|---|
| 5 | Sitzfläche |
| 10 | Rückenlehne |
| 15 | vorderer Randbereich Sitzfläche |
| 20 | Gurtbefestigungsvorrichtung |
| 25 | Gurteinstellvorrichtung |
| 30 | Gurtsystem |
| 35 | Schultergurt |
| 36 | Oberschenkelgurtabschnitt |
| 40 | Schließkörper |
| 45 | Schnappverschluss |
| 46 | Öffnungsvorrichtung für Schnappverschluss |
| 47 | Schnappverschluss |
| 50 | abgewandter Bereich |
| 55 | Gestell |
| 60 | Verlängerung |
| 61 | Gurtdurchführung |
| 65 | zentraler Bereich |
| 70 | Feder |
| 75 | Klemmvorrichtung |
| 76 | Klemmkante |
| 80 | Exzentervorrichtung |
| 85 | Lösevorrichtung |
| 86 | Betätigungsvorrichtung für Lösevorrichtung |
| 90 | Einheit |
| 95 | Umhüllung |
| 100 | Hülse |
| 105 | Befestigungsvorrichtung |
| 110 | Grundplatte |
| 115 | Halteseile |
| 120 | Träger |

## Patentansprüche

1. Kinderwagen, insbesondere Kindersportwagen, Buggy oder dgl. Fahrzeug für Kinder, mit einer Sitzfläche(5) und Rückenlehne (10), wobei
am vorderen Randbereich( 15) der Sitzfläche (5) eine Gurtbefestigungs- (20) und -einstellvorrichtung (25) angeordnet ist, die Teil eines Gurtsystems (30) ist, das zwei Schultergurte (35) umfasst, die mittels je eines Schließkörpers (40) mit der Gurtbefestigungsvorrichtung (20), insbesondere mittels eines Schnappverschlusses (45), verbindbar sind,
wobei die zwei Schultergurte (35) auf einer der Rückenlehne (10) abgewandten Seite (50) eines in eine Sitzposition bringbaren Gestells (55) des Kinderwagens eine Verlängerung (60) aufweisen, die sich durch die Gurteinstellvorrichtung (25) hindurch erstreckt,
**dadurch gekennzeichnet, dass**
die Verlängerung (60) zumindest abschnittsweise in und/oder an einer Führung verläuft, die auf der der Sitzfläche (5) und der Rückenlehne (10) abgewandten Seite (50) des Gestells (55) angeordnet ist.

2. Kinderwagen nach Anspruch 1,
**dadurch gekennzeichnet, dass**
die Sitzfläche (5) und/oder die Rückenlehne (10) ein flexibles, insbesondere textiles, Material umfasst.

3. Kinderwagen nach einem der vorhergehenden Ansprüche,
**dadurch gekennzeichnet, dass**
die Gurtbefestigungs- (20) und -einstellvorrichtung (25) in einem zentralen Bereich (65) des vorderen Randbereichs (15) der Sitzfläche (5) angeordnet sind.

4. Kinderwagen nach einem der vorhergehenden Ansprüche,
**dadurch gekennzeichnet, dass**
die Gurtbefestigungsvorrichtung (20) oberhalb der Sitzfläche (5) angeordnet und kippbar auf dieser angebracht ist, wobei die Gurtbefestigungsvorrichtung (20) in einer Ruheposition, gegebenenfalls durch die Wirkung einer Feder (70), auf der Sitzfläche (5) aufliegt.

5. Kinderwagen nach einem der vorhergehenden Ansprüche 1 bis 4,
**dadurch gekennzeichnet, dass**
die Verlängerung (60) in der Gurteinstellvorrichtung (25) mittels einer Klemmvorrichtung (75), insbesondere einer Exzentervorrichtung (80), einseitig belastbar und lösbar arretierbar ist.

6. Kinderwagen nach einem der vorhergehenden Ansprüche,
**dadurch gekennzeichnet, dass**
die Gurteinstellvorrichtung im Wesentlichen unterhalb und/oder in einer Ebene der Sitzfläche (5) angeordnet ist, wobei eine Lösevorrichtung (85) zum Lösen der Klemmvorrichtung (75) von oberhalb der Sitzfläche (5) zugänglich ist.

7. Kinderwagen nach einem der vorhergehenden Ansprüche,
**dadurch gekennzeichnet, dass**
die Gurtbefestigungsvorrichtung (20) mit der Gurteinstellvorrichtung (25) eine Einheit (90) bildet, wobei die Gurtbefestigungsvorrichtung (20) und die Gurteinstellvorrichtung (25) gegebenenfalls relativ zueinander und/oder bezüglich der Sitzfläche (5) ein- oder mehrachsig verkippbar sind.

8. Kinderwagen nach Anspruch 7,
**dadurch gekennzeichnet, dass**
die Einheit (90) oder die Gurtbefestigungsvorrichtung (20) und/oder die Gurteinstellvorrichtung (25) zumindest teilweise innerhalb einer Umhüllung (95), insbesondere einer Hülse (100) angeordnet ist.

9. Kinderwagen nach einem der vorhergehenden Ansprüche 7 oder 8,
**dadurch gekennzeichnet, dass**
die Einheit (90) oder die Gurtbefestigungsvorrichtung (20) und/oder die Gurteinstellvorrichtung (25) mittels einer Befestigungsvorrichtung (105), insbesondere einer Grundplatte (110) an der Sitzfläche (5), insbesondere im Wesentlichen unterhalb der Sitzfläche (5) mit sich durch die Sitzfläche (5) erstreckenden Halteteilen (115), befestigt ist.

10. Kinderwagen nach einem der vorhergehenden Ansprüche,
**dadurch gekennzeichnet, dass**
die Sitzfläche (5) und/oder Rückenlehne (10) zumindest teilweise, insbesondere mittels wenigstens einem, vorzugsweise flächigen, Träger (120), unterstützt ist, der zumindest teilweise aus Kunststoff besteht.

11. Kinderwagen nach Ansprüch 10,
**dadurch gekennzeichnet, dass**
der Träger (120) abschnittweise als Befestigungsvorrichtung (105) ausgebildet ist und/oder mit der Befestigungsvorrichtung (105) zusammenwirkt.

12. Kinderwagen nach einem der vorhergehenden Ansprüche 8 bis 11, Wenn abhängig von Anspruch 8,
**dadurch gekennzeichnet, dass**
die Umhüllung (95) ein weiches und/oder nachgiebiges Material, insbesondere Gummi, aufweist.

## Claims

1. Child transporter, especially a stroller, buggy or like carriage for children, having a seat surface (5) and a back rest (10),
a belt fastening (20) and adjusting (25) device being arranged in the front edge region (15) of the seat surface (5), which device is part of a belt system (30) which includes two shoulder belts (35) which are connectible to the belt fastening device (20) in each case by means of a closing element (40), especially by means of a snap-in closure (45),
the two shoulder belts (35) having, on a side (50), remote from the back rest (10), of a framework (55) of the child transporter which can be brought into a sitting position, an extension (60) which extends through the belt adjusting device (25), **characterised in that**
the extension (60) extends at least in part in and/or on a guideway which is arranged on that side (50) of the framework (55) which is remote from the seat surface (5) and the back rest (10).

2. Child transporter according to claim 1,
**characterised in that**
the seat surface (5) and/or the back rest (10) includes a flexible, especially textile, material.

3. Child transporter according to one of the preceding claims,
**characterised in that**
the belt fastening (20) and adjusting (25) device are arranged in a central region (65) of the front edge region (15) of the seat surface (5).

4. Child transporter according to one of the preceding claims,
**characterised in that**
the belt fastening device (20) is arranged above the seat surface (5) and is fixed thereon so as to be tiltable, the belt fastening device (20) lying on top of the seat surface (5) in a position of non-use, optionally as a result of the action of a spring (70).

5. Child transporter according to one of the preceding claims 1 to 4,
**characterised in that**
the extension (60) is loadable from one side, and releasably lockable, in the belt adjusting device (25) by means of a clamping device (75), especially a cam-type device (80).

6. Child transporter according to one of the preceding claims,
**characterised in that**
the belt adjusting device is arranged substantially beneath and/or in the same plane as the seat surface (5), a releasing device (85) for releasing the clamping device (75) being accessible from above the seat surface (5).

7. Child transporter according to one of the preceding claims,
**characterised in that**
the belt fastening device (20) forms a unit (90) with the belt adjusting device (25), the belt fastening device (20) and the belt adjusting device (25) being tiltable optionally relative to one another and/or in relation to the seat surface (5) on one or more axes.

8. Child transporter according to claim 7,
**characterised in that**
the unit (90) or the belt fastening device (20) and/or the belt adjusting device (25) is arranged at least in part within a casing (95), especially a sheath (100).

9. Child transporter according to one of the preceding claims 7 or 8,
**characterised in that**
the unit (90) or the belt fastening device (20) and/or the belt adjusting device (25) is fastened, by means of a fastening device (105), especially a base plate (110), on the seat surface (5), especially substantially beneath the seat surface (5), using holding parts (115) extending through the seat surface (5).

10. Child transporter according to one of the preceding claims,
**characterised in that**
the seat surface (5) and/or the back rest (10) is at least in part supported, especially by means of at least one, preferably flat, support member (120) which consists at least in part of plastics material.

11. Child transporter according to claim 10,
**characterised in that**
part of the support member (120) forms the fastening device (105) and/or it co-operates with the fastening device (105).

12. Child transporter according to one of the preceding claims 8 to 11 if dependent on claim 8,
**characterised in that**
the casing (95) comprises a soft and/or yielding material, especially rubber.

## Revendications

1. Voiture pour enfant, plus particulièrement voiture de sport pour enfant, buggy ou véhicule similaire pour enfants, avec un siège (5) et un dossier (10), dans laquelle un dispositif de fixation de ceinture (20) et de réglage de ceinture (25) est agencé sur le bord avant (15) du siège (5), ledit dispositif faisant partie d'un système de ceinture (30) comprenant deux sangles d'épaules (35) pouvant être reliées, respectivement à l'aide d'un corps de fermeture (40), au dispositif de fixation de ceinture (20), en particulier à l'aide d'un système de fermeture à cliquet (45), dans laquelle les deux sangles d'épaules (35) présentent, sur un côté (50), opposé au dossier (10), d'un châssis (55) de la voiture pour enfant pouvant être amené dans une position assise, un prolongement (60) qui s'étend à travers le dispositif de réglage de ceinture (25),
**caractérisée en ce que** le prolongement (60) s'étend, au moins partiellement, dans et/ou sur un guidage agencé sur le côté (50) du châssis (55) opposé au siège (5) et au dossier (10).

2. Voiture pour enfant selon la revendication 1, **caractérisée en ce que** le siège (5) et/ou le dossier (10) comprennent un matériau flexible, en particulier un matériau textile.

3. Voiture pour enfant selon l'une des revendications précédentes, **caractérisée en ce que** le dispositif de fixation de ceinture (20) et de réglage de ceinture (25) est agencé dans une partie centrale (65) du bord avant (15) du siège (5).

4. Voiture pour enfant selon l'une des revendications précédentes, **caractérisée en ce que** le dispositif de fixation de ceinture (20) est agencé au-dessus du siège (5) et installée de manière basculante sur celle-ci, le dispositif de fixation de ceinture (20) reposant sur le siège (5) dans une position de repos, le cas échéant grâce à l'action d'un ressort (70).

5. Voiture pour enfant selon l'une des revendications précédentes 1 à 4, **caractérisée en ce que** le prolongement (60) peut être sollicité unilatéralement et bloqué de manière réversible dans le dispositif de réglage de ceinture (25) à l'aide d'un dispositif de serrage (75), en particulier d'un dispositif d'excentrique (80).

6. Voiture pour enfant selon l'une des revendications précédentes, **caractérisée en ce que** le dispositif de réglage de ceinture est agencé essentiellement en dessous et/ou dans un plan du siège (5), un dispositif de desserrage (85) étant accessible à partir du haut du siège (5) pour le desserrage du dispositif de serrage (75).

7. Voiture pour enfant selon l'une des revendications précédentes, **caractérisée en ce que** le dispositif de fixation de ceinture (20) forme, avec le dispositif de réglage de ceinture (25), une unité (90), le dispositif de fixation de ceinture (20) et le dispositif de réglage de ceinture (25) pouvant être basculés le cas échéant sur un ou plusieurs axes l'un par rapport à l'autre et/ou par rapport au siège (5).

8. Voiture pour enfant selon la revendication 7, **caractérisée en ce que** l'unité (90) ou le dispositif de fixation de ceinture (20) et/ou le dispositif de réglage de ceinture (25) est agencé au moins partiellement à l'intérieur d'une gaine (95), en particulier d'un manchon (100).

9. Voiture pour enfant selon l'une des revendications précédentes 7 ou 8, **caractérisée en ce que** l'unité (90) ou le dispositif de fixation de ceinture (20) et/ou le dispositif de réglage de ceinture (25) est fixé à l'aide d'un dispositif de fixation (105), en particulier d'une plaque de base (110) sur le siège (5), en particulier essentiellement en dessous du siège (5), avec des éléments de maintien (115) s'étendant à travers le siège (5).

10. Voiture pour enfant selon l'une des revendications précédentes, **caractérisée en ce que** le siège (5) et/ou le dossier (10) est soutenu au moins partiellement, en particulier à l'aide d'au moins un support (120), de préférence plat, qui est constitué au moins partiellement de matière plastique.

11. Voiture pour enfant selon la revendication 10, **caractérisée en ce que** le support (120) est conçu pour une partie comme un dispositif de fixation (105) et/ou interagit avec le dispositif de fixation (105).

12. Voiture pour enfant selon l'une des revendications précédentes 8 à 11, lorsqu'elle dépend de la revendication 8, **caractérisée en ce que** la gaine (95) présente un matériau mou et/ou souple, en particulier du caoutchouc.
